# EUROPEAN PATENT APPLICATION

(11) **EP 4 620 927 A1**
(43) Date of publication of application: **24.09.2025**
(21) Application number: 25163044.8
(22) Date of filing: 11.03.2025
(51) Int. Cl.: C03B 37/15, C03C 13/04, C03C 25/002, C03C 25/64

(54) **METHOD FOR FABRICATING A NANOFIBER DEVICE**

(30) Priority: 19.03.2024 US 202418609660
(71) Applicant: Nanofiber Quantum Technologies, Inc., Tokyo 169-0051 (JP)
(72) Inventor: Kato, Shinya, Tokyo, 169-0051 (JP); Horikawa, Seitaro, Tokyo, 169-0051 (JP); Inoue, Ryotaro, Tokyo, 169-0051 (JP); Goban, Akihisa, Tokyo, 169-0051 (JP)
(74) Representative: E. Blum & Co. AG

(57) **Abstract**

The present invention relates to a fabrication technique of nanofiber devices particularly useful for applications with telecommunication wavelengths. By utilizing deuterium or tritium gases in the heating process, we mitigate the absorption losses associated with OH-bond vibrations in silica glass during high-temperature flame stretching. The shifted absorption bands of OD (deuterated hydroxyl group) or OT (tritiated hydroxyl group) result in reduced transmission losses at the telecommunication bands and improve the performance of nanofiber devices in optical communication, quantum computing and quantum communication applications.

## Description

### TECHNICAL FIELD OF THE INVENTION

The present disclosure relates to a method for manufacturing a nanofiber.

### BACKGROUND OF INVENTION

A nanofiber often made from a fiber optic cable would be an incredibly small-scale version of conventional optical fibers, likely with diameters on the order of nanometers (hence the term "nanofiber"). The fibers could have applications in various fields including photonics, telecommunications, sensing, and biomedicine.

Techniques have been proposed to manufacture a nanofiber. Similar to conventional optical fiber manufacturing, nanofibers can be fabricated through drawing or pulling techniques. A preform material, often made of silica or other suitable materials, is heated and then pulled into a fine fiber using a heated capillary or a specialized drawing tower. The diameter of the fiber can be controlled by adjusting the pulling speed and temperature. Other techniques include electrospinning, and use of templates with deposition processes. By depositing or growing materials onto these templates, nanofibers can be formed with precise dimensions. Techniques such as vapor deposition or chemical vapor deposition (CVD) can be utilized in this process.

Unfortunately, various limitations exist with conventional techniques. As the diameter of the fiber decreases to the nanoscale, manufacturing becomes increasingly challenging. Controlling parameters such as temperature, tension, and material properties becomes critical to ensure uniformity and quality in the produced nanofibers. Additionally, materials suitable for nanofiber fabrication must often possess specific properties such as high tensile strength, flexibility, and optical transparency, which are difficult to achieve. Fabricating nanofibers often require specialized equipment capable of handling extremely small scales and precise control. The availability and cost of such equipment may be prohibitive for some applications. Other limitations include limitations with mechanical, optical, and electrical properties of the fibers and difficulty in large-scale production.

J. Stone (1986) presents an overview of the main features of an isotope exchange in which the hydroxyl in the optical fiber is converted to deuterioxyl.

From the above, it is seen that improved manufacturing techniques are desired.

### SUMMARY OF INVENTION

More particularly, the present invention provides an innovative method for the fabrication of nanofiber devices, and in particular nanofiber cables, using deuterium or tritium (heavy hydrogen) as an alternative heat source to conventional hydrogen flames. By utilizing deuterium or tritium gases in the heating process, the absorption losses associated with OH-bond vibrations in silica glass during high-temperature flame stretching are mitigated. The shifted absorption bands of OD (deuterated hydroxyl group) or OT (tritiated hydroxyl group) result in reduced transmission losses at the telecommunication bands and improve the performance of nanofiber devices in optical communication, quantum computing and quantum communication applications.

In an example, the present invention provides a method for fabricating a nanofiber device. The preferred method includes providing an optical fiber in a chamber and with an inert gas. In an example, the inert gas includes at least one of nitrogen, argon, helium, or a combination of multiple gas species to remove atmospheric hydrogen and water from an exterior region of the optical fiber. In an example the method includes providing a deuterium or tritium flame as a heat source. In an example, the method includes subjecting the optical fiber comprising silica glass with the deuterium or tritium flame while, for example, reducing an OH-bond-related transmission loss in the silica glass, and while an exterior region of the optical fiber is free from atomic hydrogen and water, and other undesirable species. In an example, the method includes controlling a mixture of deuterium or tritium gas with an oxygen using an electronically controlled mass flow controller in a molar ratio of deuterium or tritium to oxygen and causing formation of a nanofiber device.

Depending upon the example, the present invention can achieve one or more of these benefits and/or advantages. In an example, the present invention provides a nanofiber for a quantum computing device using a nanofiber region. Such nanofiber region is configured with a pair of reflectors to form a cavity for a quantum computing. In an example, the present nanofiber is free from defects or limitations of conventional nanofiber devices. In an example, the present invention offers advantages of generating outputs that are reliable and efficient. These and other benefits and/or advantages are achievable with the present device and related methods. Further details of these benefits and/or advantages can be found throughout the present specification and more particularly below.

In an example, propagation loss of optical fiber due to OH (hydroxyl group) vibration mode absorption, particularly within the telecommunication bands, is a concern in fabrication of optical nanofiber. The telecommunication bands typically include the O-band (Original, 1260-1360 nm), E-band (Extended, 1360-1460 nm), S-band (Short wavelength, 1460-1530 nm), C-band (Conventional, 1530-1565 nm), L-band (Long wavelength, 1565-1625 nm), and U-band (Ultralong wavelength, 1625-1675 nm). OH group absorption can significantly impact the performance of nanofiber in these ranges.

Hydroxyl (OH) group can be introduced into the silica glass of nanofiber during the manufacturing process, primarily through Hydrogen oxygen flame. The vibration modes of these OH groups can absorb light at specific wavelengths, leading to attenuation of the signal being transmitted through the fiber. The absorption peaks by OH groups in silica occur at several specific wavelengths due to the harmonics and combination tones of the fundamental vibration mode:
First Overtone: Around 1383 nm, within the E-band, there is a significant absorption peak due to the first overtone of the OH stretching mode. This can cause notable propagation losses in this part of the spectrum.
Second Overtone: The second overtone of the OH stretch typically appears near 950 nm, outside of the primary telecommunication bands but relevant for some specialized fiber applications.

Impact on Telecommunication Bands S, C, and L Bands: These bands are widely used for long-haul telecommunications because they offer relatively low intrinsic silica loss. The presence of OH ions can introduce additional losses, especially close to the 1383 nm peak. While this is slightly outside the C-band, it can affect the E-band and potentially the S-band due to the tail of the absorption peak.

In an example, nanofiber devices, particularly those made from silica glass, are desirable in applications such as telecommunications, sensors, and biomedical devices, among others. The conventional method of fabricating these devices involves heating silica glass to a high temperature, often using a hydrogen flame. This process allows the material to be drawn into fine fibers with diameters in the nanometer range. However, hydrogen flames have a drawback: they introduce hydroxyl (OH) groups into the silica glass. These OH groups are problematic because they absorb light within certain wavelengths, leading to optical transmission losses. In telecommunications, where signal integrity is paramount, these losses can degrade the performance of fiber optic cables and devices.

The OH group absorption bands fall within the near-infrared region, which is the same region used by most telecommunication applications. This overlap is unfortunate because it can increase signal attenuation, requiring more frequent signal amplification and reducing the overall efficiency and reliability of the communication system.

In an example, the present invention provides an approach using deuterium, an isotope of hydrogen, instead of conventional hydrogen in the manner claimed. Deuterium, often referred to as heavy hydrogen, has a neutron in its nucleus, unlike hydrogen, which typically does not. This difference in mass leads to a shift in the vibrational energy levels of the deuterium-oxygen (OD) bonds formed in the glass, compared to the hydroxyl (OH) bonds. In an example, a shift in vibrational energy levels caused by using deuterium instead of hydrogen means that the absorption bands of OD bonds are moved to different wavelengths. Specifically, these bands are shifted away from the critical telecommunication wavelengths (e.g., around 1.3 to 1.55 micrometers). As a result, the introduction of deuterium reduces the optical transmission losses that plague conventional hydrogen-flame-based fabrication methods. This shift is a direct consequence of the fundamental principles of quantum mechanics, which dictate how the mass of vibrating molecules affects their energy levels and, consequently, the wavelengths of light they can absorb.

Using deuterium as a heat source offers several advantages. Deuterium enhances the optical transparency of silica glass in the telecommunication wavelength range, improving the efficiency and performance of nanofiber devices. This improvement can lead to longer transmission distances for optical signals, reduced need for signal amplification, and overall better performance of fiber optic communication systems. The present approach could be applied to other areas of photonics and optoelectronics, wherever optical transmission through materials is a factor.

This technique represents a step forward in the fabrication of optical nanofiber devices. By addressing the fundamental issue of OH group absorption through the use of deuterium, it opens up possibilities for improving the performance and reliability of optical communication systems. This approach exemplifies how advances in materials science and an understanding of quantum mechanics can lead to practical improvements in technology that underpin our conventional world.

In an example, the present invention provides a method for fabricating a nanofiber device. The preferred method includes providing an optical fiber in a chamber and with an inert gas. In an example, the inert gas includes at least one of nitrogen, argon, helium, or a combination of multiple gas species to remove atmospheric hydrogen and water from an exterior region of the optical fiber. In an example the method includes providing a deuterium or tritium flame as a heat source. In an example, the method includes subjecting the optical fiber comprising silica glass with the deuterium or tritium flame while reducing an OH-bond-related transmission loss in the silica glass, and while an exterior region of the optical fiber is free from atomic hydrogen and water, and other undesirable species. In an example, the method includes controlling a mixture of deuterium (or tritium) gas with an oxygen using an electronically controlled mass flow controller 11 in a molar ratio (deuterium or tritium to oxygen) and causing formation of a nanofiber device.

In an example, the method includes using the nanofiber device in a quantum computing or quantum repeater application.

In an example, the deuterium flame causes the optical fiber to increase in temperature to 1200 degrees Celsius or higher. In an example, the deuterium flame is scanned spatially from a first portion to a second portion of the optical fiber. In an example, the molar ratio of deuterium to oxygen is 2:1 or some other ratio, e.g., 4:1, 3:2, or variable.

In an example, the chamber is sealed or open with positive pressure with inert gas to prevent penetration of water or other molecules. In an example, the inert gas is subjected to a gas flow of the inert gas.

In an example, the method includes subjecting the optical fiber to a force to change a diameter of the optical fiber from a first diameter to a second diameter, the second diameter ranging from 2 micron to 400 nanometers, to form the nanofiber device. In an example, the flame, fueled by a mixture, e.g., of deuterium (D) and oxygen (O), implants OD group.

In an example, the nanofiber device is characterized by an absorption peak of OD vibration that has a longer wavelength than telecommunication bands S, C, and L bands.

In an example, the nanofiber device comprises an optical resonator. In an example, the optical resonator comprises two fiber Bragg gratings (FBGs) outside of a nanofiber region, thereby to measure a propagation loss by using a transmission and reflection from the nanofiber device using the optical resonator at a wavelength, e.g., ranging from 400 nanometers to 2 micrometers.

In an example, the nanofiber device is characterized by an improved performance in an optical communication application by reducing loss due to the OH-bond-related absorption added during the fabrication process from 0.5dB/cm and less. In an example, the nanofiber device is characterized as an optical resonator structure configured for a desired wavelength-specific application.

In an example, the present invention includes an alternative method for fabricating a nanofiber device using only a deuterium flame or a tritium flame as a heat source, including other processes as recited herein.

In an example, the optical fiber is provided in a chamber covering the optical fiber and the flame and with an inert gas including at least one of nitrogen, helium, or a combination of multiple gas species to remove atmospheric hydrogen and water from an exterior region of the optical fiber. In an example, the optical fiber is provided in a chamber that is sealed or open and maintained in a positive pressure with an inert gas to prevent penetration of water or a contaminant molecule into the exterior region of the optical fiber.

In an example, the inert gas is flowed over an exterior region of the optical fiber.

In an example, the nanofiber device is characterized by a performance in an optical communication application by reducing loss due to the OH-bond-related absorption added during a fabrication process from 0.5dB/cm and less as compared to a nanofiber device made with a hydrogen flame.

In an example, when tritium gas is used instead of a deuterium gas, an absorption band shifts further compared to when using deuterium gas.

Further details of the present method and related system are provided throughout the present specification and more particularly below.

A further understanding of the nature and advantages of the invention may be realized by reference to the latter portions of the specification and attached drawings.

### BRIEF DESCRIPTION OF THE DRAWINGS

In order to more fully understand the present invention and its embodiments, reference is made to the accompanying drawings. It is the understanding that these drawings are not to be considered limitations in the scope of the invention. The presently described embodiments of the invention are described with additional detail through use of the accompanying drawings in which:
Figure 1 shows a simplified diagram of a top view of a fiber pulling rig with a heating torch 18 system in an example of the present invention.
Figure 2 shows a simplified diagram of a side view of a fiber pulling rig with a heating-torch 18 system in an example of the present invention.
Figure 3 shows a simplified diagram of the optical characterization setup to evaluate the optical loss during the fabrication process in real time in an example of the present invention.
Figure 4 shows a simplified diagrams of deuterium-oxygen or tritium-oxygen mixture gas control system in an example of the present invention.
Figure 5 shows a simplified diagram of the sealed container covering the pulling rig to purge the air surrounding the flame and fill the container with nitrogen, argon, helium or a combination of multiple gas species in an example of the present invention.
Figure 6 shows a simplified diagram of the enclosed container covering the flame torch 18 tip to purge the air surrounding the flame and fill the container with nitrogen, argon, helium or a combination of multiple gas species in an example of the present invention.

### DETAILED DESCRIPTION OF THE DRAWINGS

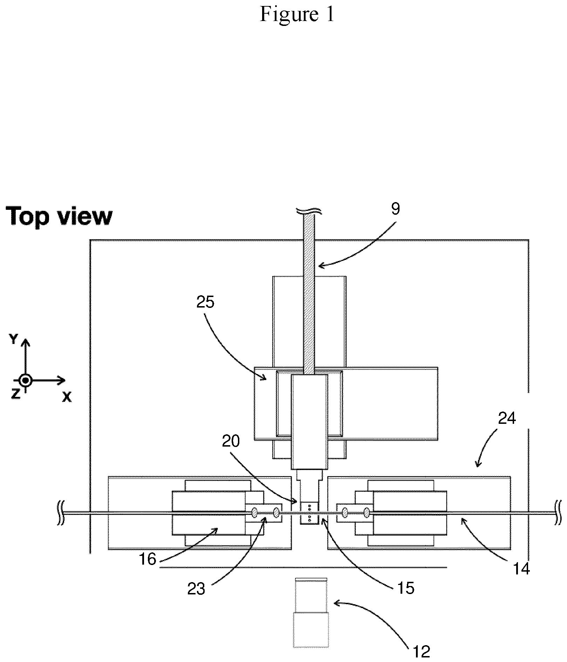

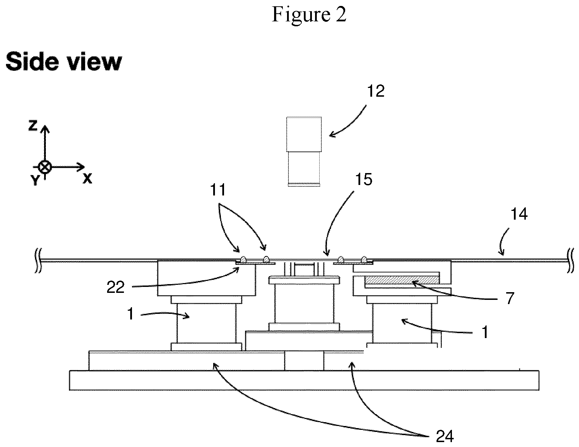

Figure 1 and Figure 2 respectively show simplified diagrams of a fiber pulling rig from a top view and a side view in an example of the present invention. The figures show a gas supply line for torch 9, an XYZ-Translation stage for torch 25, a torch with multiple openings 20, an optical fiber holder with a V-groove 16, a wafer and glue 23, an imaging system 12, an optical fiber cable (jacket-removed) 15, an optical fiber cable (jacketed) 14, an X-translation stage for fiber holder 24, a 6-axis stage 1, a force sensor 7, a glue 11 and a waver 22. As shown, a rig has translation stages for a heating-torch 18 assembly and two fiber holders for a first end and a second end of an optical fiber cable. One of the fiber holders features a V-groove for aligning the optical fiber cable and a wafer 22 for supporting the optical fiber cable via gluing. In addition, one of the fiber holders has a force sensor 7 to measure an applied tension to the optical fiber cable. The holders have, e.g., a 6-axis stage 1 to control a tip, a tilt, a yaw, an x, y, z-axis, control for an alignment. The holders are mounted on a linear translation stage. The pulling rig has imaging systems 17 orthogonally mounted to observe relative position between the optical fiber and the heating-torch 18 assembly.

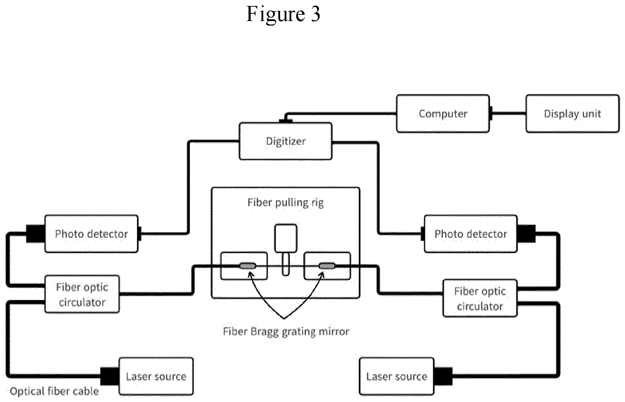

Figure 3 shows a simplified diagram of an optical characterization device in an example of the present invention. The figure shows a display unit, a computer, a digitizer , a fiber pulling rig, a photo detector, a fiber optic circulator, a optical fiber cable a the laser source. The device has two laser sources, fiber optic circulators and photo detectors to measure transmittance in two different wavelengths. The signals from the photo detectors are recorded with a computer by using a digitizer and displayed on a display unit during a nanofiber fabrication process. One of the laser sources is used to measure the transmittance of the nanofiber in real time during the fabrication process. Alternatively, a laser source with wide wavelength range is employed for transmission spectroscopy, enabling the assessment of wavelength-dependent transmission losses. For precise characterization of optical loss, fiber Bragg grating resonator is fabricated outside of the nanofiber region, allowing enhanced sensitivity to the internal loss due to the multiple circulations inside the resonators.

The other laser source is used to characterize a diameter of nanofiber in real time during the fabrication process by analyzing an interferometric signal between a fundamental mode and higher order modes of the nanofiber.

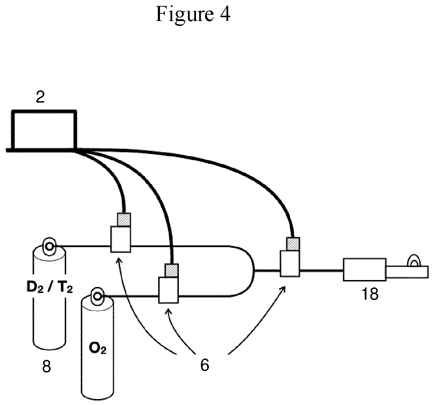

Figure 4 is a simplified diagram of a deuterium-oxygen or tritium-oxygen source that is utilized to create a hydrogen-free flame in an example of the present invention. The figure shows a computer 2, gas sources 8, flow controllers 6 and a torch 18. Initially, the flow rates of deuterium or tritium and oxygen are individually regulated by separate mass-flow controllers 6, enabling the precise mixing of deuterium gas with oxygen, typically, in a 2:1 molar ratio or some other ratio. Once the deuterium or tritium and oxygen gases have been combined, the flow rate of the resulting gas mixture is modulated by another mass-flow controller 6. These three mass-flow controllers 6 are controlled in real-time throughout the nanofiber fabrication process to ensure precise control. The regulated mixture of gases is then channeled to the torch 18 tip, which generates a flame. This flame reaches temperatures exceeding 1200 degrees Celsius or higher and is the primary heat source for the fabrication of nanofibers. A temperature above 1200 degrees Celsius is typically required to sufficiently soften the silica glass for drawing into fibers. The high temperature also ensures that any contaminants are burned off, reducing the likelihood of impurities being introduced into the nanofibers.

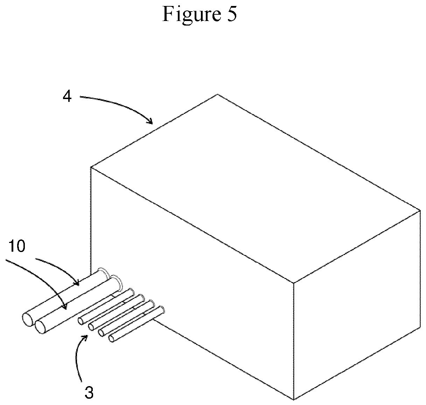

Figure 5 shows a simplified diagram of a sealed chamber that encases the entire heating and pulling apparatus used in the fabrication of nanofibers according to an example of the present invention. The figure shows electrical signal lines 3, gas supply lines 10 and an enclosed chamber 4. This chamber is filled with inert and pure gases such as nitrogen, argon, helium, or a combination thereof, among others. The selection of inert gases like nitrogen, argon, and helium is due to their non-reactive nature. These gases do not participate in chemical reactions under the conditions present in the chamber, thereby maintaining the purity of the environment during the high-temperature phases of nanofiber production. The integrity of the sealed chamber is critical as it ensures the exclusion of hydrogen gas, water vapor, and any other gases that could react to form hydroxyl (OH) groups. The elimination of these contaminants is essential for preventing OH formation during the nanofiber fabrication process.

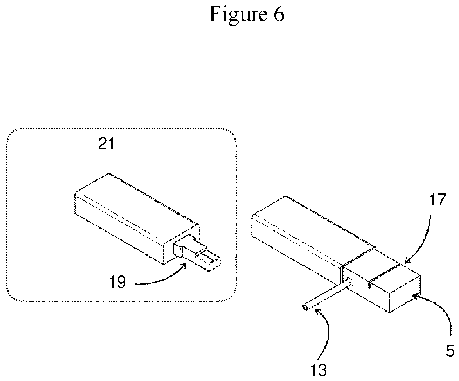

Figure 6 shows a simplified diagram of a container that houses the heating tip, which is infused with inert and pure gases such as nitrogen, argon, helium, or a combination thereof in an example. In the figure a torch without enclosed container 21, a torch tip with multiple openings 19, an inert gas supply line 13, an enclosed container 5 and a slit / hole for optical fiber cable to be processed 17 can be seen. The container is designed with a slit 17 to accommodate an optical fiber, and the circulation of inert and pure gases is maintained to prevent the ingress of hydrogen gas, water vapor, and any other gas mixtures containing hydrogen into the enclosed container 5.

Additionally, the incorporation of optical resonator structures within nanofiber devices allows for the measurement of propagation losses at specific wavelengths, providing insights into device performance as schematically shown above.

While the above is a full description of the specific examples, various modifications, alternative constructions, and equivalents may be used. As an example, the device can include any combination of elements described above.

## Claims

1. A method for fabricating a nanofiber device, the method comprising:
providing an optical fiber;
providing a deuterium or tritium flame as a heat source;
subjecting the optical fiber comprising silica glass with the deuterium or tritium flame while reducing an OH-bond-related transmission loss in the silica glass, and while an exterior region of the optical fiber is free from atomic hydrogen and water; and
controlling a mixture of deuterium or tritium gas with oxygen gas using an electronically controlled mass flow controller (11) in a molar ratio; of
deuterium gas to oxygen gas or tritium gas to oxygen gas; and
causing formation of a nanofiber device.

2. The method of claim 1 wherein the deuterium or tritium flame causes the optical fiber to increase in temperature to 1200 degrees Celsius or higher.

3. The method of claim 1 or claim 2 wherein the deuterium or tritium flame is **characterized by** a size of 1 millimeter or less.

4. The method of any of the preceding claims wherein the deuterium or tritium flame is scanned spatially from a first portion to a second portion of the optical fiber.

5. The method of any of the preceding claims wherein the molar ratio is 2:1.

6. The method of any of the preceding claims further comprising subjecting the optical fiber to a force to change a diameter of the optical fiber from a first diameter to a second diameter, the second diameter ranging from 2 micron to 400 nanometers, to form the nanofiber device.

7. The method of any of the preceding claims wherein the flame, fueled by a mixture of deuterium (D) and oxygen (O) or tritium (T) and oxygen, implants OD group or OT group.

8. The method of any of the preceding claims wherein the nanofiber device is **characterized by** an absorption peak of OD and/or OT vibration that has a longer wavelength than telecommunication bands S, C, and L bands.

9. The method of any of the preceding claims wherein the optical fiber is provided in a chamber enclosing the optical fiber and the flame and with an inert gas including at least one of nitrogen, helium, or a combination of multiple gas species to remove atmospheric hydrogen and water from an exterior region of the optical fiber.

10. The method of any of the preceding claims wherein the optical fiber is provided in a chamber that is sealed or open and maintained in a positive pressure with an inert gas to prevent penetration of water or a contaminant molecule into the exterior region of the optical fiber
preferably wherein the chamber is the chamber enclosing the deuterium flame, which chamber is sealed.

11. The method of claim 9 or claim 10 wherein the inert gas is flowed over an exterior region of the optical fiber.

12. The method of any of the preceding claims wherein the nanofiber device comprises an optical resonator.

13. The method of claim 12 wherein the optical resonator comprises two fiber Bragg gratings (FBGs) outside of a nanofiber region, thereby to measure a propagation loss of the nanofiber device by using a transmission and reflection from the optical resonator at a wavelength ranging from 400 nanometers to 2 micrometers.

14. The method of any of the preceding claims wherein the nanofiber device is **characterized by** a performance in an optical communication application by reducing loss due to the OH-bond-related absorption from 0.5dB/cm and less compared to a nanofiber device made with a hydrogen flame,
preferably wherein the nanofiber device is further **characterized by** a reduced transmission loss from a first level to a second level.

15. The method of any of the preceding claims wherein
the nanofiber device comprises an optical resonator, and/or
the optical fiber provided in the nanofiber device is characterized as an optical resonator structure, and/or
the nanofiber device is used in a quantum computing or quantum repeater application, preferably wherein the flame used for manufacturing the nanofiber device is the deuterium flame.
